# EUROPEAN PATENT APPLICATION

(11) **EP 4 730 499 A2**
(43) Date of publication of application: **22.04.2026**
(21) Application number: 26162451.4
(22) Date of filing: 29.11.2021
(51) Int. Cl.: H01M 50/152

(54) **BATTERY CELL, BATTERY, POWER CONSUMPTION APPARATUS, AND METHOD AND APPARATUS FOR MANUFACTURING BATTERY CELL**

(62) Divisional of application: 21965333.4
(71) Applicant: Contemporary Amperex Technology (Hong Kong) Limited, Hong Kong (HK)
(72) Inventor: SU, Huasheng, Ningde, Fujian, 352100 (CN)
(74) Representative: Liu, Harry Rui

(57) **Abstract**

The embodiment of the present application relates to the technical field of batteries. Provided are a battery cell, a battery, a power consumption apparatus, and a method and an apparatus for manufacturing the battery cell. The battery cell comprises a shell, an electrode assembly, an end cover and a current collecting member. The electrode assembly is accommodated in the shell, and the electrode assembly comprises a main body part and a first lug. The end cover covers an opening of the shell, and the end cover is provided with a liquid injection hole. The current collecting member is accommodated in the shell and located on the side of the end cover facing the main body part, and the current collecting member is configured to connect the first lug and the end cover so as to achieve electric connection between the end cover and the lug. The current collecting member is provided with a first center hole and a flow guide channel, the first center hole and the liquid injection hole are oppositely arranged, and the flow guide channel is configured to allow at least part of electrolyte entering the battery cell from the liquid injection hole to enter the main body part. The electrolyte entering the battery cell from the liquid injection hole can more easily permeate into the electrode assembly, thereby improving the liquid injection efficiency and improving the permeation effect of the electrolyte on the electrode assembly.

## Description

### TECHNICAL FIELD

This application relates to the technical field of batteries, and in particular, to a battery cell, a battery, an electrical device, and a method and equipment for manufacturing a battery cell.

### BACKGROUND

Batteries are widely used in electronic devices such as a mobile phone, a notebook computer, an electric power cart, an electric vehicle, an electric airplane, an electric ship, an electric toy car, an electric toy ship, an electric toy airplane, and an electric tool.

A battery cell generally includes a housing, an electrode assembly, and an end cap. The end cap fits and covers the housing to provide an airtight space for the electrode assembly and an electrolytic solution. The battery cell outputs electrical energy through chemical reactions between the electrode assembly and the electrolytic solution. Currently, the electrolytic solution is generally injected into the battery cell through an injection port on the end cap. It is relatively difficult for the electrolytic solution to infiltrate the electrode assembly.

### SUMMARY

Some embodiments of this application provide a battery cell, a battery, an electrical device, and a method and equipment for manufacturing a battery cell, so as to alleviate the difficulty of an electrolytic solution in infiltrating an electrode assembly.

According to a first aspect, an embodiment of this application provides a battery cell, including: a housing, on which an opening is created; an electrode assembly, accommodated in the housing, where the electrode assembly includes a main portion and a first tab, and the first tab protrudes from an end of the main portion; an end cap, configured to fit and cover the opening, where an injection port is created on the end cap; and a current collection component, accommodated in the housing and located on a side of the end cap, where the side is oriented toward the main portion. The current collection component is configured to connect the first tab and the end cap to implement electrical connection between the end cap and the first tab. The current collection component includes a first center hole and a guide channel. The first center hole is disposed opposite to the injection port in an axial direction of the first center hole. The guide channel is configured to guide at least a part of an electrolytic solution into the main portion after the electrolytic solution enters the battery cell from the injection port.

In the above technical solution, the current collection component includes a first center hole and a guide channel. During injection of an electrolytic solution into the battery cell through the injection port, the electrolytic solution can not only flow into the main portion along the first center hole of the current collection component, but also flow into the main portion along the guide channel of the current collection component, so as to infiltrate electrode plates. This structure increases the channels for the electrolytic solution to flow into the main portion. In this way, the electrolytic solution that enters the battery cell through the injection port can more easily infiltrate the electrode assembly, thereby improving the injection efficiency, and improving the effect of the electrolytic solution in infiltrating the electrode assembly.

In some embodiments, the current collection component includes an outer surface and an inner surface opposite to each other. The outer surface is oriented toward the end cap. The inner surface is oriented toward the first tab. The guide channel includes a guide hole. The guide hole penetrates the outer surface and the inner surface of the current collection component.

In the above technical solution, the guide hole penetrates the outer surface and the inner surface of the current collection component. The electrolytic solution that enters the battery cell through the injection port can directly flow from one side to another side of the current collection component through the guide hole, where the one side is oriented toward the end cap, and the other side is oriented toward the main portion. In this way, the electrolytic solution enters the main portion to infiltrate the electrode plates.

In some embodiments, the guide hole deviates from the first center hole so as to be independent of the first center hole.

In the above technical solution, the guide hole deviates from the first center hole, thereby facilitating formation and processing of the guide hole, and achieving a relatively high strength of the current collection component.

In some embodiments, the guide hole penetrates a hole wall of the first center hole.

In the above technical solution, the guide hole penetrates the hole wall of the first center hole, so that the guide hole communicates with the first center hole. In this way, the electrolytic solution can flow inside and between the guide hole and the first center hole. If the electrolytic solution having entered the guide hole is unable to enter the main portion in time, the electrolytic solution can flow from the guide hole into the first center hole, so as to enter the main portion through the first center hole. If the electrolytic solution having entered the first center hole is unable to enter the main portion in time, the electrolytic solution can flow from the first center hole into the guide hole, so as to enter the main portion through the guide hole.

In some embodiments, the guide hole extends along a radial direction of the first center hole.

In the above technical solution, the guide hole extends along the radial direction of the first center hole, so that the electrolytic solution can flow inside the guide hole along the radial direction of the first center hole, thereby increasing the flow range of the electrolytic solution in the guide hole. In this way, the electrolytic solution can enter the main portion from a plurality of regions of the guide hole, thereby improving the injection efficiency and the effect of the electrolytic solution in infiltrating the electrode assembly.

In some embodiments, the guide channel includes a plurality of guide holes. The plurality of guide holes is distributed around the first center hole circumferentially at intervals.

In the above technical solution, the plurality of guide holes is distributed around the first center hole circumferentially at intervals, so that the electrolytic solution can flow into the main portion along the plurality of guide holes, thereby improving the injection efficiency and the effect of the electrolytic solution in infiltrating the electrode assembly.

In some embodiments, the end cap includes an abutment face, and the abutment face is configured to abut against the outer surface. A recess is created on the end cap. The recess is recessed from the abutment face away from the main portion. The recess communicates with the injection port. The recess is disposed opposite to at least one guide hole in the axial direction of the first center hole.

In the above technical solution, the recess communicates with the injection port. The electrolytic solution can enter the recess in a process of injecting the electrolytic solution into the battery cell through the injection port. Because the recess is disposed opposite to at least one guide hole, the electrolytic solution having entered the recess can directly enter the at least one guide hole. This ensures that the electrolytic solution can enter the guide hole more easily and quickly in a process of injecting the electrolytic solution into the battery cell through the injection port, thereby improving both the injection efficiency and the effect of the electrolytic solution in infiltrating the electrode assembly.

In some embodiments, the end cap includes an electrolyte outlet surface located in the recess. One end of the injection port penetrates the electrolyte outlet surface, and the electrolyte outlet surface is in clearance fit with the outer surface.

In the above technical solution, the electrolyte outlet surface is in clearance fit with the outer surface, so that the injection port communicates with the recess, making it convenient for the electrolytic solution to enter the recess from the injection port, and making it convenient for the electrolytic solution to flow into the main portion along the guide hole in a process of injecting the electrolytic solution into the battery cell through the injection port.

In some embodiments, the guide channel includes a guide groove. The guide groove is located on a side of the current collection component, where the side is oriented toward the first tab. The first center hole communicates with the guide groove.

In the above technical solution, the guide groove is located on a side of the current collection component, the side being oriented toward the first tab. The guide groove communicates with the first center hole. The electrolytic solution that enters the battery cell through the injection port enters the first center hole first. A part of the electrolytic solution enters the main portion through the first center hole. Another part of the electrolytic solution flows sideways along the guide groove, and finally enters the main portion from the guide groove. The guide groove increases the sideways flow range of the electrolytic solution, making it easier and faster for the electrolytic solution to enter the main portion.

In some embodiments, the current collection component includes: a body portion, configured to abut against the end cap, where the first center hole is located on the body portion; and two abutment portions, configured to abut against the first tab. Both of the abutment portions are disposed protrusively on a side of the body portion, where the side is away from the end cap. The two abutment portions are located on two sides of the first center hole in a radial direction respectively. The guide groove is formed between the two abutment portions.

In the above technical solution, two abutment portions are disposed protrusively on the body portion. A guide groove is formed between the two abutment portions, so that a relatively large space for flow of the electrolytic solution is formed between the body portion and the main portion, thereby increasing the range of sideways flow of the electrolytic solution, and smoothing the entry of the electrolytic solution into the electrode assembly.

In some embodiments, the abutment portions are V-shaped, and the two abutment portions are arranged back-to-back against each other.

In the above technical solution, the two V-shaped abutment portions are arranged back-to-back against each other, so that the guide groove between the two abutment portions is a tapering structure that tapers to a minimum width at the first center hole, thereby increasing the flow range of the electrolytic solution in the guide groove. In this way, the electrolytic solution can enter the main portion from a plurality of regions of the guide groove, making it easier and faster for the electrolytic solution to enter the main portion.

In some embodiments, the first tab is welded to the abutment portions to form a weld mark, and the weld mark extends along a track of the abutment portions.

In the above technical solution, the weld mark extends along the track of the abutment portions, so that the weld mark is also V-shaped, thereby implementing close connection between the entire abutment portion and the first tab.

In some embodiments, a second center hole is created on the main portion. The second center hole is disposed opposite to the first center hole in the axial direction of the first center hole.

In the above technical solution, the second center hole is disposed opposite to the first center hole. In a process of injecting the electrolytic solution into the battery cell through the injection port, the electrolytic solution having entered the first center hole can quickly enter the first center hole to infiltrate the electrode plates.

According to a second aspect, an embodiment of this application provides a battery. The battery includes: the battery cell according to any one of the embodiments in the first aspect; and a box, configured to accommodate the battery cell.

According to a third aspect, an embodiment of this application provides an electrical device. The electrical device includes the battery according to any one of the embodiments in the first aspect.

According to a fourth aspect, an embodiment of this application provides a method for manufacturing a battery cell. The manufacturing method includes: providing a housing, where an opening is created on the housing; providing an electrode assembly, where the electrode assembly includes a main portion and a first tab, and the first tab protrudes from an end of the main portion; providing an end cap, where an injection port is created on the end cap; providing a current collection component, where the current collection component includes a first center hole and a guide channel; connecting the current collection component to the first tab; letting the electrode assembly be accommodated in the housing; letting the end cap fit and cover the opening; and connecting the end cap to the current collection component to implement electrical connection between the end cap and the first tab. The current collection component is accommodated in the housing and located on a side of the end cap, where the side is oriented toward the main portion. The first center hole is disposed opposite to the injection port in an axial direction of the first center hole. The guide channel is configured to guide at least a part of an electrolytic solution into the main portion after the electrolytic solution enters the battery cell from the injection port.

According to a fifth aspect, an embodiment of this application further provides a piece of equipment for manufacturing a battery cell. The manufacturing equipment includes: a first providing apparatus, configured to provide a housing, where an opening is created on the housing; a second providing apparatus, configured to provide an electrode assembly, where the electrode assembly includes a main portion and a first tab, and the first tab protrudes from an end of the main portion; a third providing apparatus, configured to provide an end cap, where an injection port is created on the end cap; a fourth providing apparatus, configured to provide a current collection component, where the current collection component includes a first center hole and a guide channel; and an assembling apparatus, configured to connect the current collection component to the first tab; let the electrode assembly be accommodated in the housing; let the end cap fit and cover the opening; and connect the end cap to the current collection component to implement electrical connection between the end cap and the first tab. The current collection component is accommodated in the housing and located on a side of the end cap, where the side is oriented toward the main portion. The first center hole is disposed opposite to the injection port in an axial direction of the first center hole. The guide channel is configured to guide at least a part of an electrolytic solution into the main portion after the electrolytic solution enters the battery cell from the injection port.

### BRIEF DESCRIPTION OF DRAWINGS

To describe technical solutions in embodiments of this application more clearly, the following outlines the drawings to be used in the embodiments. It will be apparent that the following drawings show merely some embodiments of this application, and therefore, are not intended to limit the scope. A person of ordinary skill in the art may derive other related drawings from the drawings without making any creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is a cross-sectional view of the battery cell shown in FIG. 3;
FIG. 5 is a schematic structural diagram of a current collection component shown in FIG. 4;
FIG. 6 is a schematic structural diagram of a current collection member according to some other embodiments of this application;
FIG. 7 is a partial cross-sectional view of the battery cell shown in FIG. 4;
FIG. 8 is a partial cross-sectional view of a battery cell according to some other embodiments of this application;
FIG. 9 is a schematic structural diagram of a current collection component shown in FIG. 8;
FIG. 10 is a flowchart of a method for manufacturing a battery cell according to some embodiments of this application; and
FIG. 11 is a schematic block diagram of equipment for manufacturing a battery cell according to some embodiments of this application.

List of reference numerals: 10-box; 11-first part; 12-second part; 20 battery cell; 21-housing; 22-electrode assembly; 221-main portion; 222-first tab; 223-second tab; 224-second center hole; 23-end cap; 231-injection port; 232-abutment face; 233 recess; 2331 bottom face; 234-electrolyte outlet surface; 235-protruding portion; 24-current collection component; 241-first center hole; 242-guide channel; 2421-guide hole; 2422-guide groove; 243-outer surface; 244-inner surface; 245-body portion; 246-abutment portion; 25 blocking piece; 26-sealing element; 100-battery; 200-controller; 300-motor; 1000-vehicle; 2000-manufacturing equipment; 2100-first providing apparatus; 2200-second providing apparatus; 2300-third providing apparatus; 2400-fourth providing apparatus; 2500-assembling apparatus.

### DETAILED DESCRIPTION OF EMBODIMENTS

To make the objectives, technical solutions, and advantages of the embodiments of this application clearer, the following gives a clear description of the technical solutions in some embodiments of this application with reference to the drawings in some embodiments of this application. It will be apparent that the described embodiments are merely a part rather than all of the embodiments of this application. All other embodiments derived by a person of ordinary skill in the art based on the embodiments of this application without making any creative efforts still fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as a cylinder, flat body, or cuboid, without being limited in embodiments of this application. Depending on the form of packaging, the battery cell is typically classed into three types: cylindrical battery cell, prismatic battery cell, and pouch-type battery cell. The embodiments of this application do not limit the type of the battery cell.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolytic solution. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part of the positive current collector that is uncoated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. A part of the negative current collector that is uncoated with the negative active material layer protrudes from a part coated with the negative active material layer, and the part uncoated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of a material such as polypropylene (PP) or polyethylene (PE). In addition, the electrode assembly may be of a jelly-roll type structure or a stacked type structure, without being limited herein.

In a typical battery cell, an end cap needs to be electrically connected to a tab of the electrode assembly, so that the end cap serves as an output electrode for the battery cell to output electrical energy. To facilitate electrical connection between the end cap and the tab, a current collection component is generally disposed between the electrode assembly and the end cap. Both the end cap and the tab are connected to the current collection component to implement the electrical connection between the end cap and the tab.

The inventor is aware that, after the current collection component is disposed between the end cap and the electrode assembly, in a process of injecting the electrolytic solution into the battery cell through an injection port on the end cap, the current collection component exerts an effect of blocking the electrolytic solution. Consequently, the electrolytic solution can hardly enter the battery cell to infiltrate the electrode assembly.

To alleviate the difficulty of the electrolytic solution in infiltrating the electrode assembly, the applicant finds through research that a center hole may be disposed on the current collection component. In a process of injecting the electrolytic solution into the battery cell through the injection port, the electrolytic solution flows into a main portion of the electrode assembly through the center hole on the current collection component. However, the flow capacity of the center hole on the current collection component is limited, and it is still relatively difficult for the electrolytic solution to infiltrate the electrode assembly.

Based on the above considerations, in order to solve the difficulty for the electrolytic solution to infiltrate the electrode assembly, the inventor has designed a battery cell after in-depth research. In the battery cell, in addition to a center hole created on the current collection component, a guide channel is provided on the current collection component. The guide channel allows at least a part of an electrolytic solution to enter the main portion of the electrode assembly, where the electrolytic solution has entered battery cell from the injection port on the end cap.

In such a battery cell, the current collection component includes a center hole and a guide channel. During injection of an electrolytic solution into the battery cell through the injection port, the electrolytic solution can not only flow into the main portion along the center hole of the current collection component, but also flow into the main portion along the guide channel of the current collection component, so as to infiltrate electrode plates. This structure increases the channels for the electrolytic solution to flow into the main portion. In this way, the electrolytic solution that enters the battery cell through the injection port can more easily infiltrate the electrode assembly, thereby improving the injection efficiency, and improving the effect of the electrolytic solution in infiltrating the electrode assembly.

The battery cell described in this embodiment of this application is applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

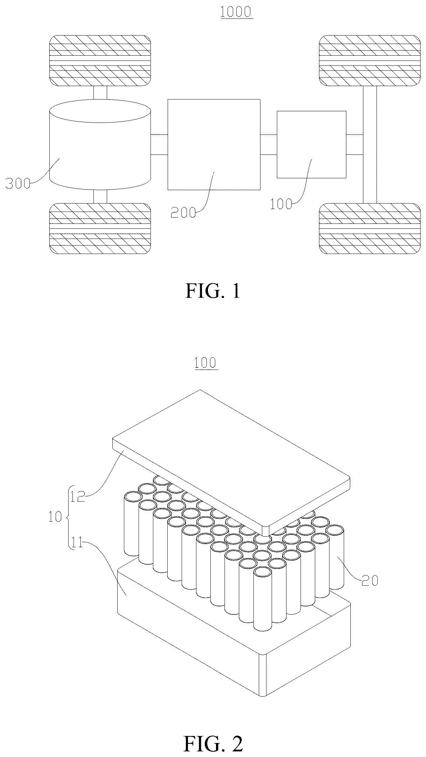

Referring to FIG. 1, FIG. 1 is a schematic structural diagram of a vehicle 1000 according to some embodiments of this application. A battery 100 is disposed inside the vehicle 1000. The battery 100 may be disposed at the bottom, front, or rear of the vehicle 1000. The battery 100 may be configured to supply power to the vehicle 1000. For example, the battery 100 may serve as an operating power supply of the vehicle 1000.

The vehicle 1000 may further include a controller 200 and a motor 300. The controller 200 is configured to control the battery 100 to supply power to the motor 300, for example, to meet electrical energy requirements in starting, navigating, or running the vehicle 1000.

In some embodiments of this application, the battery 100 serves not only as an operating power supply of the vehicle 1000, but may also serve as a drive power supply of the vehicle 1000 to provide a driving power supply for the vehicle 1000 in place of or partly in place of fuel oil or natural gas.

Referring to FIG. 2, FIG. 2 is a schematic structural diagram of a battery 100 according to some embodiments of this application. The battery 100 includes a box 10 and a battery cell 20. The box 10 is configured to accommodate the battery cell 20.

The box 10 is a component configured to accommodate the battery cell 20. The box 10 provides an accommodation space for the battery cell 20. The box 10 may be in various structures. In some embodiments, the box 10 may include a first part 11 and a second part 12. The first part 11 and the second part 12 fit and cover each other to define the accommodation space configured to accommodate the battery cell 20. The first part 11 and the second part 12 may be in various shapes, such as a cuboid or cylinder. The first part 11 may be a hollow structure opened up at one side. The second part 12 may also be a hollow structure opened up at one side. The open-up side of the second part 12 fits and covers the open-up side of the first part 11 to form the box 10 that provides the accommodation space. Alternatively, the first part 11 is a hollow structure opened up at one side, and the second part 12 assumes a plate-shaped structure. The second part 12 fits and covers the open-up side of the first part 11 to form the box 10 that provides the accommodation space. Airtightness may be implemented between the first part 11 and the second part 12 by a sealing element. The sealing element may be a sealing ring, a sealant, or the like.

There may be one or more battery cells 20 in the battery 100. If there are a plurality of battery cells 20, the plurality of battery cells 20 may be connected in series, parallel, or series-and-parallel pattern. The series-and-parallel pattern means a combination of series connection and parallel connection of the plurality of battery cells 20. The plurality of battery cells 20 are connected in series, parallel, or series-parallel pattern to form a battery module first, and then a plurality of battery modules is connected in series, parallel, or series-parallel pattern to form an entirety that is to be accommodated in the box 10. Alternatively, all battery cells 20 are directly connected in series, parallel, or series- parallel pattern, and then the entirety of all battery cells 20 is accommodated in the box 10.

In some embodiments, the battery 100 may further include a busbar component. The plurality of battery cells 20 may be electrically connected by the busbar component, so as to implement series, parallel, or series-and-parallel connection between the plurality of battery cells 20. The busbar component may be a metal conductor, such as copper, iron, aluminum, stainless steel, or an aluminum alloy.

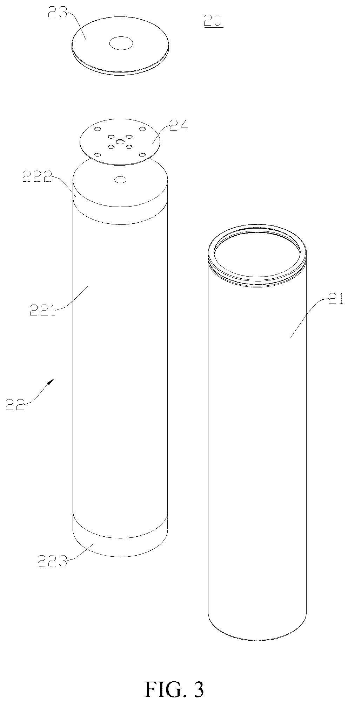

Referring to FIG. 3, FIG. 3 is an exploded view of a battery cell 20 according to some embodiments of this application. The battery cell 20 may include a housing 21, an electrode assembly 22, an end cap 23, and a current collection component 24.

The housing 21 is a component configured to accommodate the electrode assembly 22. The housing 21 may be a hollow structure opened at one end, or, the housing 21 may be a hollow structure opened at two ends. The housing 21 may be made of a variety of materials such as copper, iron, aluminum, steel, or an aluminum alloy. The housing 21 may be in various shapes such as a cylinder or cuboid. As an example, in FIG. 3, the housing 21 is cylindrical.

The electrode assembly 22 is a component that reacts electrochemically in the battery cell 20. The electrode assembly 22 may include a main portion 221, a first tab 222, and a second tab 223. Both the first tab 222 and the second tab 223 protrude from one end of the main portion 221. The first tab 222 and the second tab 223 may be located on the same end of the main portion 221, or may be located on two opposite ends of the main portion 221 respectively. Of the first tab 222 and the second tab 223, one is a positive tab, and the other is a negative tab. The main portion 221 may include a positive electrode plate, a negative electrode plate, and a separator. The main portion 221 may be a jelly-roll structure formed by winding the positive electrode plate, the separator, and the negative electrode plate. Alternatively, the main portion 221 may be a stacked structure formed by stacking the positive electrode plate, the separator, and the negative electrode plate.

The positive electrode plate includes a positive current collector and a positive active material layer applied on two opposite sides of the positive current collector. The negative electrode plate includes a negative current collector and a negative active material layer applied on two opposite sides of the negative current collector. The body portion 221 is a part of the electrode assembly 22, the part corresponds to a region of the electrode plates, and the region is coated with an active material layer. The positive tab is a part coated with no positive active material layer on the positive electrode plate, and the negative tab is a part coated with no negative active material layer on the negative electrode plate.

The end cap 23 is a component that fits and covers the opening of the housing 21 to isolate the internal environment of the battery cell 20 from the external environment. The end cap 23 fits and covers the opening of the housing 21. The end cap 23 and the housing 21 jointly define an airtight space configured to accommodate the electrode assembly 22, the electrolytic solution, and other components. The shape of the end cap 23 may fit the shape of the housing 21. For example, the housing 21 is a cuboidal structure, and the end cap 23 is a rectangular plate-shaped structure that fits the housing 21. For another example, the housing 21 is a cylindrical structure, and the end cap 23 is a circular plate-shaped structure that fits the housing 21. The end cap 23 may be made of a variety of materials such as copper, iron, aluminum, steel, or an aluminum alloy.

One or two end caps 23 may exist in the battery cell 20. The number of the end caps 23 may depend on the specific structure of the housing 21. For example, if the housing 21 is a hollow structure opened at one end, one end cap 23 may be disposed. For another example, if the housing 21 is a hollow structure opened at two opposite ends, two end caps 23 may be disposed. The two end caps 23 fit and cover the two openings of the end cap 23 respectively.

The current collection component 24 is a component configured to implement electrical connection between the end cap 23 and the tab. One or two end current collection components 24 may exist in the battery cell 20. In an embodiment in which one end cap 23 exists in the battery cell 20, one current collection component 24 may be disposed correspondingly. The first tab 222 may be connected to the end cap 23 by the current collection component 24, and the second tab 223 may be connected to the housing 21 so that the housing 21 and the end cap 23 serve as two output electrodes of the battery cell 20 respectively to output electrical energy. In an embodiment in which two end cap 23 exist in the battery cell 20, two current collection components 24 may be disposed correspondingly. The first tab 222 may be connected to the end cap 23 by one current collection component 24, and the second tab 223 may be connected to the end cap 23 by the other current collection component 24 so that the two end caps 23 serve as two output electrodes of the battery cell 20 respectively to output electrical energy.

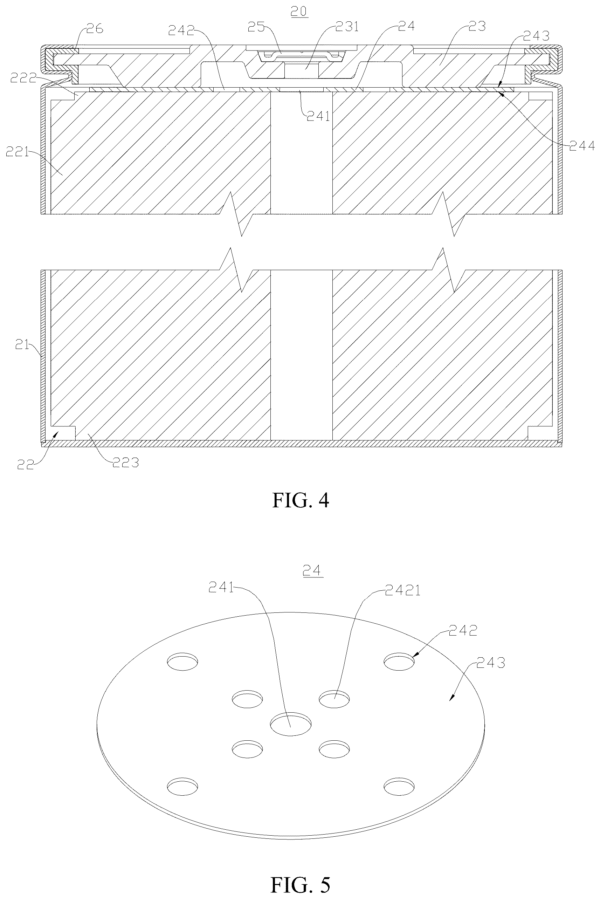

Referring to FIG. 4, FIG. 4 is a cross-sectional view of the battery cell 20 shown in FIG. 3. An embodiment of this application provides a battery cell 20. The battery cell 20 includes a housing 21, an electrode assembly 22, an end cap 23, and a current collection component 24. An opening is created on the housing 21. The electrode assembly 22 is accommodated in the housing 21. The electrode assembly 22 includes a main portion 221 and a first tab 222. The first tab 222 protrudes from an end of the main portion 221. The end cap 23 fits and covers an opening. An injection port 231 is created on the end cap 23. The current collection component 24 is accommodated in the housing 21 and located on a side of the end cap 23, where the side is oriented toward the main portion 221. The current collection component 24 is configured to connect the first tab 222 and the end cap 23 to implement electrical connection between the end cap 23 and the first tab 222. The current collection component 24 includes a first center hole 241 and a guide channel 242. The first center hole 241 is disposed opposite to the injection port 231 in an axial direction of the first center hole 241. The guide channel 242 is configured to guide at least a part of an electrolytic solution into the main portion 221 after the electrolytic solution enters the battery cell 20 from the injection port 231.

The injection port 231 on the end cap 23 may be a circular hole. A blocking piece 25 configured to block the injection port 231 may be disposed on the end cap 23. In this way, after the electrolytic solution is injected into the battery cell 20 through the injection port 231, the injection port 231 is blocked by the blocking piece 25. The end cap 23 and the housing 21 may be hermetically connected by a sealing element 26. The sealing element 26 may be made of rubber, plastic or other materials.

The current collection component 24 may be a conductor made of a material such as copper, iron, aluminum, steel, or aluminum alloy. The current collection component 24 is connected to both the first tab 222 and the end cap 23 to implement electrical connection between the first tab 222 and the end cap 23. The current collection component 24 and the first tab 222 may be connected in a non-fixed manner. For example, the current collection component 24 is just in abutment with the first tab 222. Alternatively, the current collection component 24 and the first tab 222 may be connected in a fixed manner. For example, the current collection component 24 is welded to the first tab 222. The current collection component 24 and the end cap 23 may be connected in a non-fixed manner. For example, the current collection component 24 is just in abutment with the end cap 23. Alternatively, the current collection component 24 and the end cap 23 may be connected in a fixed manner. For example, the current collection component 24 is welded to the end cap 23. The first tab 222 connected to the current collection component 24 may be a positive tab or a negative tab. The first tab 222 may assume a ring structure. The first tab 222 may be disposed coaxially with the main portion 221.

The first center hole 241 is a through-hole disposed at the center of the current collection component 24. Using an example in which the current collection component 24 assumes a disc structure, the axis of the first center hole 241 coincides with the axis of the current collection component 24. The first center hole 241 and the injection port 231 are disposed opposite to each other in the axial direction of the first center hole 241. The first center hole 241 may be coaxial with the injection port 231, or the axis of the first center hole 241 may be slightly deviated from the axis of the injection port 231. As long as the first center hole 241 is not fully staggered apart from the injection port 231 in the radial direction of the first center hole 241, the first center hole 241 is understood as being disposed opposite to the injection port 231 in the axial direction of the first center hole 241.

The guide channel 242 is a channel located on the current collection component 24 and different from the first center hole 241. The guide channel 242 may be disposed around the first center hole 241 and independent of the first center hole 241. Alternatively, the guide channel 242 may communicate with the first center hole 241. The guide channel 242 may be a through-hole that penetrates the outer surface 243 and the inner surface 244 of the current collection component 24, or a groove created on the outer surface 243 or the inner surface 244 of the current collection component. The outer surface 243 of the current collection component 24 means a surface of the current collection component 24, the surface being oriented toward the end cap 23 in the thickness direction. The inner surface 244 of the current collection component 24 means a surface of the current collection component 24, the surface being oriented toward the first tab 222 in the thickness direction. There may be one or more guide channels 242. Using an example in which there are a plurality of guide channels 242, the plurality of guide channels 242 may be distributed around the first center hole 241.

The current collection component 24 includes a first center hole 241 and a guide channel 242. During injection of an electrolytic solution into the battery cell 20 through the injection port 231, the electrolytic solution can not only flow into the main portion 221 along the first center hole 241 of the current collection component 24, but also flow into the main portion 221 along the guide channel 242 of the current collection component 24, so as to infiltrate electrode plates. This structure increases the channels for the electrolytic solution to flow into the main portion 221. In this way, the electrolytic solution that enters the battery cell 20 through the injection port 231 can more easily infiltrate the electrode assembly 22, thereby improving the injection efficiency, and improving the effect of the electrolytic solution in infiltrating the electrode assembly 22.

In some embodiments, referring to FIG. 4 and FIG. 5, FIG. 5 and FIG. 4 are schematic structural diagrams of the current collection component 24. The current collection component 24 includes an outer surface 243 and an inner surface 244 opposite to each other. The outer surface 243 is oriented toward the end cap 23. The inner surface 244 is oriented toward the first tab 222. The guide channel 242 includes a guide hole 2421. The guide hole 2421 penetrates the outer surface 243 and the inner surface 244 of the current collection component 24.

The outer surface 243 of the current collection component 24 may abut against the end cap 23 so that the current collection component 24 keeps in contact with the end cap 23. The inner surface 244 of the current collection component 24 may abut against the first tab 222 so that the current collection component 24 keeps in contact with the first tab 222. As an example, in order to further improve the stability of the contact between the current collection component 24 and the end cap 23 and the contact between the current collection component 24 and the first tab 222, the current collection component 24 may be welded to the first tab 222, and the current collection component 24 may be welded to the end cap 23.

The guide hole 2421 is a through-hole that penetrates the outer surface 243 and the inner surface 244 of the current collection component 24. The guide hole 2421 may be a variously shaped hole, such as a circular hole, a square hole, an elongated hole, or an arc hole. There may be one or more guide holes 2421 in the guide channel 242.

In this embodiment, the guide hole 2421 penetrates the outer surface 243 and the inner surface 244 of the current collection component 24. The electrolytic solution that enters the battery cell 20 through the injection port 231 can directly flow from one side to another side of the current collection component 24 through the guide hole 2421, where the one side is oriented toward the end cap 23, and the other side is oriented toward the main portion 221. In this way, the electrolytic solution enters the main portion 221 to infiltrate the electrode plates.

In some embodiments, still referring to FIG. 5, the guide hole 2421 deviates from the first center hole 241 so as to be independent of the first center hole 241.

That the guide hole 2421 deviates from the first center hole 241 means that the guide hole 2421 is at a distance from the first center hole 241 so that the guide hole 2421 is independent of the first center hole 241.

As shown in FIG. 5, when there is a plurality of guide holes 2421 in the guide channel 242, the plurality of guide holes 2421 may be disposed along the radial direction of the first center hole 241, and the plurality of guide holes may be disposed along the circumferential direction of the first center hole 241. As an example, the guide hole 2421 is a circular hole.

In this embodiment, the guide hole 2421 deviates from the first center hole 241, thereby facilitating formation and processing of the guide hole 2421, and achieving a relatively high strength of the current collection component 24.

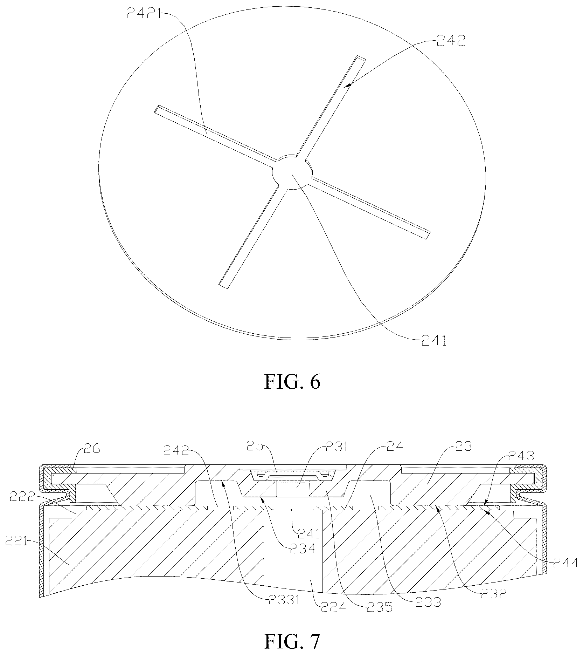

In some embodiments, referring to FIG. 6, FIG. 6 is a schematic structural diagram of a current collection component 24 according to some other embodiments of this application. The guide hole 2421 penetrates the hole wall of the first center hole 241.

That the guide hole 2421 penetrates the hole wall of the first center hole 241 makes the guide hole 2421 communicate with the first center hole 241. Using an example in which the guide hole 2421 is an elongated hole or an arc hole, the guide hole 2421 penetrates the hole wall of the first center hole 241 at an end of the extension direction of the guide hole.

When there is a plurality of guide holes 2421 in the guide channel 242, the plurality of guide holes 2421 may be disposed along the circumferential direction of the first center hole 241.

In this embodiment, the guide hole 2421 communicates with the first center hole 241 so that the electrolytic solution can flow inside and between the guide hole 2421 and the first center hole 241. If the electrolytic solution having entered the guide hole 2421 is unable to enter the main portion 221 in time, the electrolytic solution can flow from the guide hole 2421 into the first center hole 241, so as to enter the main portion 221 through the first center hole 241. If the electrolytic solution having entered the first center hole 241 is unable to enter the main portion 221 in time, the electrolytic solution can flow from the first center hole 241 into the guide hole 2421, so as to enter the main portion 221 through the guide hole 2421.

In some embodiments, still referring to FIG. 6, the guide hole 2421 extends along a radial direction of the first center hole 241.

Understandably, when the guide hole 2421 is an elongated hole, the extension direction of the guide hole 2421 is consistent with the radial direction of the first center hole 241.

In this embodiment, the guide hole 2421 extends along the radial direction of the first center hole 241, so that the electrolytic solution can flow inside the guide hole 2421 along the radial direction of the first center hole 241, thereby increasing the flow range of the electrolytic solution in the guide hole 2421. In this way, the electrolytic solution can enter the main portion 221 from a plurality of regions of the guide hole 2421, thereby improving the injection efficiency and the effect of the electrolytic solution in infiltrating the electrode assembly 22.

In some embodiments, referring to FIG. 5 and FIG. 6, the guide channel 242 includes a plurality of guide holes 2421. The plurality of guide holes 2421 are distributed around the first center hole 241 circumferentially at intervals. By virtue of this structure, the electrolytic solution can flow into the main portion 221 along the plurality of guide holes 2421, thereby improving the injection efficiency and the effect of the electrolytic solution in infiltrating the electrode assembly 22.

In some embodiments, referring to FIG. 7, FIG. 7 is a partial cross-sectional view of the battery cell 20 shown in FIG. 4. The end cap 23 includes an abutment face 232. The abutment face 232 is configured to abut against the outer surface 243. A recess 233 is created on the end cap 23. The recess 233 is recessed from the abutment face 232 away from the main portion 221. The recess 233 communicates with the injection port 231. The recess 233 is disposed opposite to at least one guide hole 2421 in the axial direction of the first center hole 241.

The abutment face 232 is a surface of the end cap by which the end cap 23 abuts against the outer face 243 of the current collection component 24. The recess 233 is a recessed space located on the end cap 23 and recessed from the abutment face 232 away from the main portion 221. The recess 233 may be a circular groove coaxial with the injection port 231.

That the recess 233 communicates with the injection port 231 may come in two circumstances. In one circumstance, the communication is an axial communication between the recess 233 and the injection port 231. For example, the recess 233 and the injection port 231 combine to form a stepped hole, and an axial end of the injection port 231 communicates with an axial end of the recess 233. In the other circumstance, the recess 233 communicates with the injection port 231 radially. For example, at least a part of the injection port 231 is located inside the recess 233, and the injection port communicates with the recess through a radially arranged channel.

It is hereby noted that, as long as the recess 233 is not fully staggered apart from at least one guide hole 2421 in the radial direction of the first center hole 241, the recess 233 is understood as being disposed opposite to at least one guide hole 2421 in the axial direction of the first center hole 241. The recess being disposed opposite to at least one guide hole may also be understood as the recess 233 covering part or all of the at least one guide hole 2421 along the axial direction of the first center hole 241.

As shown in FIG. 5, in an embodiment, the guide hole 2421 deviates from the first center hole 241 and a plurality of guide holes 2421 are distributed along the circumferential direction of the first center hole 241. In this embodiment, the recess 233 (not shown in FIG. 5) may be arranged opposite to all the guide holes 2421, or opposite to some of the guide holes 2421. As shown in FIG. 6, in an embodiment, the guide hole 2421 penetrates the hole wall of the first center hole 241 and a plurality of guide holes 2421 are distributed along the circumferential direction of the first center hole 241. In this embodiment, the recess 233 (not shown in FIG. 6) may be arranged opposite to all the guide holes 2421, or opposite to some of the guide holes 2421.

In this embodiment described above, the recess 233 communicates with the injection port 231. The electrolytic solution can enter the recess 233 in a process of injecting the electrolytic solution into the battery cell 20 through the injection port 231. Because the region in which the recess 233 is located covers at least a part of the guide hole 2421, the electrolytic solution having entered the recess 233 can directly enter the at least one guide hole 2421. This ensures that the electrolytic solution can enter the guide hole 2421 more easily and quickly in a process of injecting the electrolytic solution into the battery cell 20 through the injection port 231, thereby improving both the injection efficiency and the effect of the electrolytic solution in infiltrating the electrode assembly 22.

In some embodiments, still referring to FIG. 7, the end cap 23 includes an electrolyte outlet surface 234 located in the recess 233. One end of the injection port 231 penetrates the electrolyte outlet surface 234, and the electrolyte outlet surface 234 is in clearance fit with the outer surface 243.

With the electrolyte outlet surface 234 being in clearance fit with the outer surface 243, the electrolyte outlet surface 234 is not in contact with, but at a clearance apart from, the outer surface 243, so that the electrolytic solution can flow into the recess 233 through the clearance.

As an example, the recess 233 includes a bottom face 2331 oriented toward the outer surface 243. A protruding portion 235 is disposed protrusively on the bottom face 2331. An end of the protruding portion 235, oriented toward the outer surface 243, forms an electrolyte outlet surface 234. A clearance exists between the outer peripheral surface of the protruding portion 235 and the inner peripheral surface of the recess 233 to accommodate the electrolytic solution. The injection port 231 is located in the recess 235. The disposed protruding portion 235 can increase the strength of the end cap 23 in a position at which the injection port 231 is located. The bottom face 2331 is a surface of the recess 233, the surface being farthest from the outer surface 243. The outer peripheral surface is a surface of the protruding portion 235, the surface being connected between the bottom face 2331 and the electrolyte outlet surface 234. The inner peripheral surface is a surface of the recess 233, the surface being connected between the bottom face 2331 and the abutment face 232.

In this embodiment, the electrolyte outlet surface 234 is in clearance fit with the outer surface 243, so that the injection port 231 communicates with the recess 233, making it convenient for the electrolytic solution to enter the recess 233 from the injection port 231, and making it convenient for the electrolytic solution to flow into the main portion 221 along the guide hole 2421 in a process of injecting the electrolytic solution into the battery cell 20 through the injection port 231.

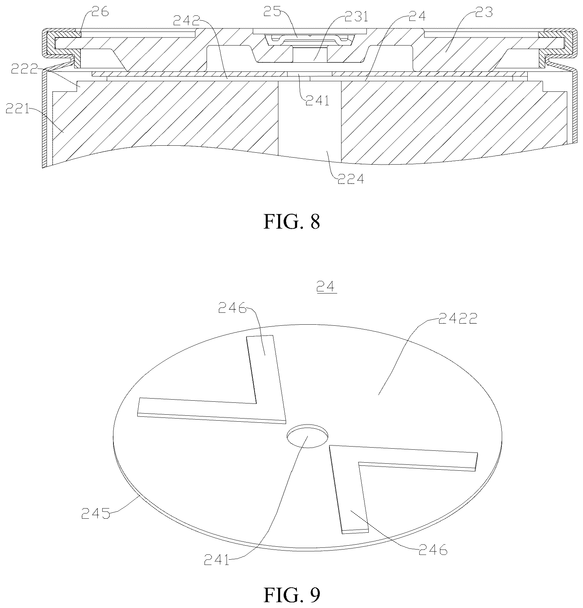

In some embodiments, referring to FIG. 8 and FIG. 9, FIG. 8 is a partial cross-sectional view of a battery cell 20 according to some other embodiments of this application; and FIG. 9 is a schematic structural diagram of a current collection component 24 shown in FIG. 8. The guide channel 242 includes a guide groove 2422. The guide groove 2422 is located on a side of the current collection component 24, where the side is oriented toward the first tab 222. The first center hole 241 communicates with the guide groove 2422.

The guide groove 2422 may be in various shapes such as an elongated groove, a circular groove, or a fan-shaped groove. There may be one or more guide grooves 2422 in the guide channel 242. Using an example in which there are a plurality of guide grooves 2422 in the guide channel 242, the plurality of guide grooves 2422 may be distributed circumferentially around the first center hole 241 at intervals.

In a case that the guide channel 242 includes a guide groove 2422, the guide channel 242 may also include the guide hole 2421 described in each of the foregoing embodiments. In other words, the guide channel 242 may include the guide groove 2422 alone or the guide hole 2421 alone, or may include both the guide groove 2422 and the guide hole 2421. As an example, in FIG. 9, the guide channel 242 includes the guide groove 2422 alone.

The guide groove 2422 is located on a side of the current collection component 24, the side being oriented toward the first tab 222. The guide groove communicates with the first center hole 241. The electrolytic solution that enters the battery cell 20 through the injection port 231 enters the first center hole 241 first. A part of the electrolytic solution enters the main portion 221 through the first center hole 241. Another part of the electrolytic solution flows sideways along the guide groove 2422, and finally enters the main portion 221 from the guide groove 2422. The guide groove 2422 increases the sideways flow range of the electrolytic solution, making it easier and faster for the electrolytic solution to enter the main portion 221.

In some embodiments, still referring to FIG. 9, the current collection component 24 includes a body portion 245 and an abutment portion 246. The body portion 245 is configured to abut against the end cap 23 (not shown in FIG. 9). The first center hole 241 is located on the body portion 245. Two abutment portions 246 are configured to abut against the first tab 222 (not shown in FIG. 9). Both of the abutment portions 246 are disposed protrusively on a side of the body portion 245, where the side is away from the end cap 23. The two abutment portions 246 are located on two sides of the first center hole 241 in a radial direction respectively. A guide groove 2422 is formed between the two abutment portions 246.

The body portion 245 is a main body of the current collection component 24. The abutment portion 246 is a part of the current collection component 24, where the part protrudes from the body portion 245. The body portion 245 and the abutment portion 246 may be formed in one piece. The body portion 245 abuts against the end cap 23, so that the body portion 245 keeps in contact with the end cap 23. The abutment portion 246 abuts against the first tab 222 so that the abutment portion 246 keeps in contact with the first tab 222. As an example, in order to further improve the stability of the contact between the current collection component 24 and the end cap 23 and the contact between the current collection component 24 and the first tab 222, the abutment portion 246 may be welded to the first tab 222, and the body portion 245 may be welded to the end cap 23.

As an example, the body portion 245 assumes a disc structure, and the first center hole 241 is located at the center of the body portion 245.

In an embodiment in which the guide channel 242 further includes a guide hole 2421, the guide hole 2421 may be independent of or communicate with the guide groove 2422. Using an example in which the guide hole 2421 communicates with the guide groove 2422, the guide hole 2421 may be located on the body portion 245. The guide hole 2421 penetrates a surface of the body portion 245, the surface being away from the end cap 23. In this way, the guide hole 2421 communicates with the guide groove 2422.

In this embodiment, two abutment portions 246 are disposed protrusively on the body portion 245. A guide groove 2422 is formed between the two abutment portions 246, so that a relatively large space for flow of the electrolytic solution is formed between the body portion 245 and the main portion 221, thereby increasing the range of sideways flow of the electrolytic solution, and smoothing the entry of the electrolytic solution into the electrode assembly 22.

In addition, each abutment portion 246 protrudes from the body portion 245, thereby more easily ensuring flatness of the surface of the abutment portion 246 by which the abutment portion abuts against the first tab 222, and keeping a good contact between the abutment portion 246 and the first tab 222.

In some embodiments, still referring to FIG. 9, the abutment portions 246 are V-shaped, and the two abutment portions 246 are arranged back-to-back against each other.

Because each abutment portion 246 is V-shaped, the abutment portion 246 includes a pointed end and an open end. In the radial direction of the first center hole 241, the pointed end is closer to the first center hole 241 than the open end. The back-to-back arrangement of the two abutment portions 246 means that the open ends of the two abutment portions 246 are arranged back-to-back against each other.

In this embodiment, the two V-shaped abutment portions 246 are arranged back-to-back against each other, so that the guide groove 2422 between the two abutment portions 246 is a tapering structure that tapers to a minimum width at the first center hole 241, thereby increasing the flow range of the electrolytic solution in the guide groove 2422. In this way, the electrolytic solution can enter the main portion 221 from a plurality of regions of the guide groove 2422, making it easier and faster for the electrolytic solution to enter the main portion 221.

In addition, the V-shaped structure of the abutment portion 246 increases the range of contact between the current collection component 24 and the first tab 222 in the radial direction of the first center hole 241. In this way, the current collection component 24 can abut against both the inner circle part of the first tab 222 and the outer circle part of the first tab 222, and make polarization less prone to occur.

In some embodiments, the first tab 222 (shown in FIG. 8) is welded to the abutment portions 246 to form a weld mark. The weld mark extends along a track of the abutment portions 246.

A region of weld between the first tab 222 and the abutment portion 246 forms the weld mark. The abutment portion 246 is V-shaped and the weld mark extends along the track of the abutment portion 246, so that the weld mark is also V-shaped. This structure makes the entire abutment portion 246 closely connected to the first tab 222, thereby reducing the probability of polarization.

In some embodiments, still referring to FIG. 7 and FIG. 8, a second center hole 224 is created on the main portion 221. The second center hole 224 is disposed opposite to the first center hole 241 in the axial direction of the first center hole 241.

Using an example in which the main portion 221 is a jelly-roll structure formed by winding the positive electrode plate, the separator, and the negative electrode plate, the second center hole 224 is formed at the center of the jelly roll of the main portion 221.

It is hereby noted that, as long as the second center hole 224 is not fully staggered apart from the first center hole 241 in the radial direction of the first center hole 241, the second center hole 224 is understood as being disposed opposite to the first center hole 241 in the axial direction of the first center hole 241. The two center holes being disposed opposite to each other in the axial direction may be: the second center hole 224 is coaxial with the first center hole 241, or the axis of the second center hole 224 is slightly deviated from the axis of the first center hole 241. As an example, in FIG. 7 and FIG. 8, the second center hole 224, the first center hole 241, and the injection port 231 are coaxial with each other.

In this embodiment, the second center hole 224 is disposed opposite to the first center hole 241. In a process of injecting the electrolytic solution into the battery cell 20 through the injection port 231, the electrolytic solution having entered the first center hole 241 can quickly enter the first center hole 241 to infiltrate the electrode plates.

An embodiment of this application provides a battery 100, including a box 10 and the battery cell 20 according to any embodiment described above. The box 10 is configured to accommodate the battery cell 20.

An embodiment of this application provides an electrical device, including the battery 100 according to any embodiment described above.

In addition, referring to FIG. 3 and FIG. 4, an embodiment of this application provides a cylindrical battery, including a housing 21, an electrode assembly 22, an end cap 23, and a current collection component 24. The electrode assembly 22 includes a main body 221 as well as a first tab 222 and a second tab 223 that are of opposite polarities. The first tab 222 and the second tab 223 protrude from the main portion 221 and are located at two opposite ends of the main portion 221 respectively. The first tab 222 is connected to the end cap 23 by the current collection component 24, and the second tab 223 is connected to the housing 21. The current collection component 24 includes a first center hole 241 and a guide channel 242. In an axial direction of the first center hole 241, the first center hole 241 is disposed opposite to the injection port 231 on the end cap 23, and opposite to the second center hole 224 on the main portion 221. The guide channel 242 is configured to guide at least a part of an electrolytic solution into the main portion 221 after the electrolytic solution enters the battery cell 20 from the injection port 231.

In such a cylindrical battery, the current collection component 24 includes a first center hole 241 and a guide channel 242. During injection of an electrolytic solution into the battery cell 20 through the injection port 231, the electrolytic solution can not only flow into the main portion 221 along the first center hole 241 of the current collection component 24, but also flow into the main portion 221 along the guide channel 242 of the current collection component 24. In this way, the electrolytic solution that enters the battery cell 20 through the injection port 231 can more easily infiltrate the electrode assembly 22, thereby improving the injection efficiency, and improving the effect of the electrolytic solution in infiltrating the electrode assembly 22.

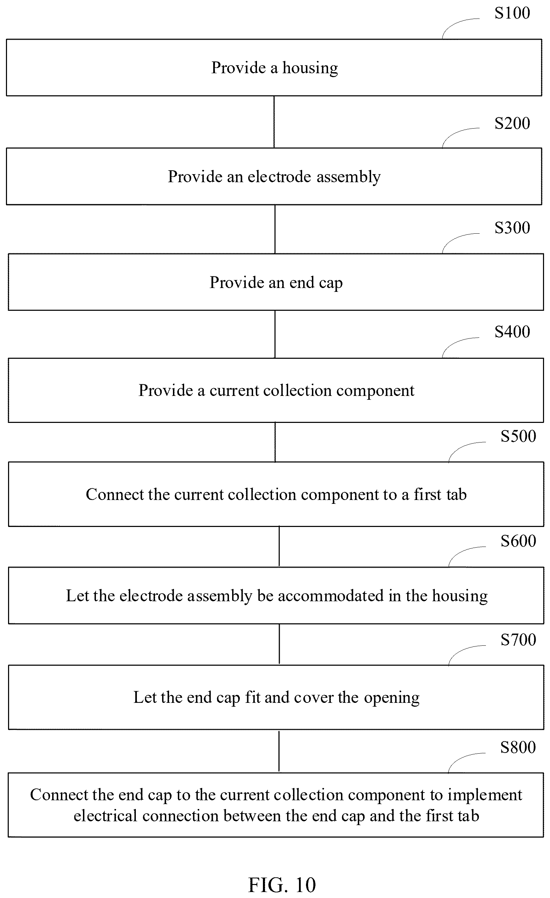

Referring to FIG. 10, FIG. 10 is a flowchart of a method for manufacturing a battery cell 20 according to some embodiments of this application. An embodiment of this application provides a method for manufacturing a battery cell 20. The manufacturing method includes the following steps:
S100: Providing a housing 21, where an opening is created on the housing 21;
S200: Providing an electrode assembly 22, where the electrode assembly 22 includes a main portion 221 and a first tab 222, and the first tab 222 protrudes from an end of the main portion 221;
S300: Providing an end cap 23, where an injection port 231 is created on the end cap 23;
S400: Providing a current collection component 24, where the current collection component 24 includes a first center hole 241 and a guide channel 242;
S500: Connecting the current collection component 24 to the first tab 222;
S600: Letting the electrode assembly 22 be accommodated in the housing 21;
S700: Letting the end cap 23 fit and cover the opening; and
S800: Connecting the end cap 23 to the current collection component 24 to implement electrical connection between the end cap 23 and the first tab 222.

The current collection component 24 is accommodated in the housing 21 and located on a side of the end cap 23, where the side is oriented toward the main portion 221. The first center hole 241 is disposed opposite to the injection port 231 in an axial direction of the first center hole 241. The guide channel 242 is configured to guide at least a part of an electrolytic solution into the main portion 221 after the electrolytic solution enters the battery cell 20 from the injection port 231.

In the above method, the order between step S100, step S200, step S300, and step S400 is not limited. For example, step S400 may be performed first, step S300 may be performed next, step S200 next, and step S100 finally.

In addition, in the above method, the order between step S500 and step S600 is not limited. For example, step S600 may be performed first, and then step S500 is performed.

It is hereby noted that, for the related structure of the battery cell 20 manufactured by the manufacturing method provided in the foregoing embodiment, reference may be made to the description of the battery cell 20 provided in each preceding embodiment, details of which are omitted herein.

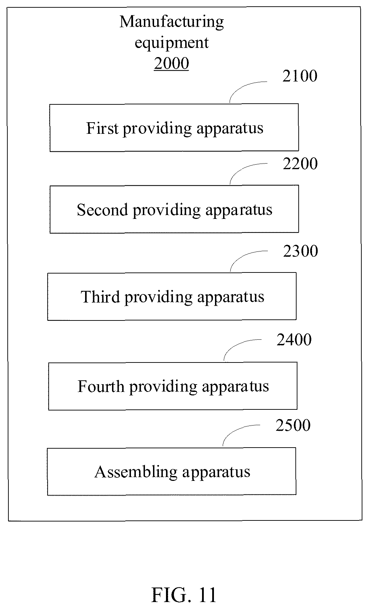

Referring to FIG. 11, FIG. 11 is a schematic block diagram of equipment 2000 for manufacturing a battery cell 20 according to some embodiments of this application. An embodiment of this application further provides a piece of equipment 2000 for manufacturing a battery cell 20. The manufacturing equipment 2000 includes a first providing apparatus 2100, a second providing apparatus 2200, a third providing apparatus 2300, a fourth providing apparatus 2400, and an assembling apparatus 2500.

The first providing apparatus 2100 is configured to provide a housing 21. An opening is created on the housing 21. The second providing apparatus 2200 is configured to provide an electrode assembly 22. The electrode assembly 22 includes a main portion 221 and a first tab 222. The first tab 222 protrudes from an end of the main portion 221. The third providing apparatus 2300 is configured to provide an end cap 23. An injection port 231 is created on the end cap 23. The fourth providing apparatus 2400 is configured to provide a current collection component 24. The current collection component 24 includes a first center hole 241 and a guide channel 242. The assembling apparatus 2500 is configured to connect the current collection component 24 to the first tab 222, and let the electrode assembly 22 be accommodated in the housing 21. The assembling apparatus 2500 is further configured to let the end cap 23 fit and cover the opening. The assembling apparatus 2500 is further configured to connect the end cap 23 to the current collection component 24 to implement electrical connection between the end cap 23 and the tab.

The current collection component 24 is accommodated in the housing 21 and located on a side of the end cap 23, where the side is oriented toward the main portion 221. The first center hole 241 is disposed opposite to the injection port 231 in an axial direction of the first center hole 241. The guide channel 242 is configured to guide at least a part of an electrolytic solution into the main portion 221 after the electrolytic solution enters the battery cell 20 from the injection port 231.

Further exemplary embodiments of the invention are set out in the following numbered clauses:
Clause 1. A battery cell, comprising: a housing, on which an opening is created; an electrode assembly, accommodated in the housing, wherein the electrode assembly comprises a main portion and a first tab, and the first tab protrudes from an end of the main portion; an end cap, configured to fit and cover the opening, wherein an injection port is created on the end cap; and a current collection component, accommodated in the housing and located on a side of the end cap, wherein the side is oriented toward the main portion, and the current collection component is configured to connect the first tab and the end cap to implement electrical connection between the end cap and the first tab; and the current collection component comprises a first center hole and a guide channel, the first center hole is disposed opposite to the injection port in an axial direction of the first center hole, and the guide channel is configured to guide at least a part of an electrolytic solution into the main portion after the electrolytic solution enters the battery cell from the injection port.
Clause 2. The battery cell according to clause 1, wherein the current collection component comprises an outer surface and an inner surface opposite to each other, the outer surface is oriented toward the end cap, and the inner surface is oriented toward the first tab; and the guide channel comprises a guide hole, and the guide hole penetrates the outer surface and the inner surface of the current collection component.
Clause 3. The battery cell according to clause 2, wherein the guide hole deviates from the first center hole so as to be independent of the first center hole.
Clause 4. The battery cell according to clause 2, wherein the guide hole penetrates a hole wall of the first center hole.
Clause 5. The battery cell according to clause 4, wherein the guide hole extends along a radial direction of the first center hole.
Clause 6. The battery cell according to any one of clauses 2 to 5, wherein the guide channel comprises a plurality of guide holes, and the plurality of guide holes is distributed around the first center hole circumferentially at intervals.
Clause 7. The battery cell according to any one of clauses 2 to 6, wherein the end cap comprises an abutment face, and the abutment face is configured to abut against the outer surface; and a recess is created on the end cap, wherein the recess is recessed from the abutment face away from the main portion, the recess communicates with the injection port, and the recess is disposed opposite to at least one guide hole in the axial direction of the first center hole.
Clause 8. The battery cell according to clause 7, wherein the end cap comprises an electrolyte outlet surface located in the recess, one end of the injection port penetrates the electrolyte outlet surface, and the electrolyte outlet surface is in clearance fit with the outer surface.
Clause 9. The battery cell according to any one of clauses 1 to 8, wherein the guide channel comprises a guide groove, the guide groove is located on a side of the current collection component, wherein the side is oriented toward the first tab, and the first center hole communicates with the guide groove.
Clause 10. The battery cell according to clause 9, wherein the current collection component comprises: a body portion, configured to abut against the end cap, wherein the first center hole is located on the body portion; and two abutment portions, configured to abut against the first tab, wherein both of the abutment portions are disposed protrusively on a side of the body portion, wherein the side is away from the end cap, the two abutment portions are located on two sides of the first center hole in a radial direction respectively, and the guide groove is formed between the two abutment portions.
Clause 11. The battery cell according to clause 10, wherein the abutment portions are V-shaped, and the two abutment portions are arranged back-to-back against each other.
Clause 12. The battery cell according to clause 10 or 11, wherein the first tab is welded to the abutment portions to form a weld mark, and the weld mark extends along a track of the abutment portions.
Clause 13. The battery cell according to any one of clauses 1 to 12, wherein a second center hole is created on the main portion, and the second center hole is disposed opposite to the first center hole in the axial direction of the first center hole.
Clause 14. A battery, comprising: the battery cell according to any one of clauses 1 to 13; and a box, configured to accommodate the battery cell.
Clause 15. An electrical device, comprising the battery according to clause 14.
Clause 16. A method for manufacturing a battery cell, wherein the manufacturing method comprises: providing a housing, wherein an opening is created on the housing; providing an electrode assembly, wherein the electrode assembly comprises a main portion and a first tab, and the first tab protrudes from an end of the main portion; providing an end cap, wherein an injection port is created on the end cap; providing a current collection component, wherein the current collection component comprises a first center hole and a guide channel; connecting the current collection component to the first tab; letting the electrode assembly be accommodated in the housing; letting the end cap fit and cover the opening; and connecting the end cap to the current collection component to implement electrical connection between the end cap and the first tab, wherein the current collection component is accommodated in the housing and located on a side of the end cap, wherein the side is oriented toward the main portion; the first center hole is disposed opposite to the injection port in an axial direction of the first center hole; and the guide channel is configured to guide at least a part of an electrolytic solution into the main portion after the electrolytic solution enters the battery cell from the injection port.
Clause 17. A piece of equipment for manufacturing a battery cell, wherein the manufacturing equipment comprises: a first providing apparatus, configured to provide a housing, wherein an opening is created on the housing; a second providing apparatus, configured to provide an electrode assembly, wherein the electrode assembly comprises a main portion and a first tab, and the first tab protrudes from an end of the main portion; a third providing apparatus, configured to provide an end cap, wherein an injection port is created on the end cap; a fourth providing apparatus, configured to provide a current collection component, wherein the current collection component comprises a first center hole and a guide channel; and an assembling apparatus, configured to connect the current collection component to the first tab; let the electrode assembly be accommodated in the housing; let the end cap fit and cover the opening; and connect the end cap to the current collection component to implement electrical connection between the end cap and the first tab, wherein the current collection component is accommodated in the housing and located on a side of the end cap, wherein the side is oriented toward the main portion; the first center hole is disposed opposite to the injection port in an axial direction of the first center hole; and the guide channel is configured to guide at least a part of an electrolytic solution into the main portion after the electrolytic solution enters the battery cell from the injection port.

It is hereby noted that, for the related structure of the battery cell 20 manufactured by the manufacturing equipment 2000 provided in the foregoing embodiment, reference may be made to the description of the battery cell 20 provided in each preceding embodiment, details of which are omitted herein.

It is hereby noted that to the extent that no conflict occurs, the embodiments of this application and the features in the embodiments may be combined with each other.

The foregoing embodiments are just intended to describe the technical solutions of this application, but not to limit this application. To a person skilled in the art, various modifications and variations may be made to this application. Any and all modifications, equivalent replacements, improvements, and the like made without departing from the spirit and principles of this application still fall within the protection scope of this application.

## Claims

1. A battery cell, comprising:
a housing, on which an opening is created;
an electrode assembly, accommodated in the housing, wherein the electrode assembly comprises a main portion and a first tab, and the first tab protrudes from an end of the main portion;
an end cap, configured to fit and cover the opening, wherein an injection port is created on the end cap; and
a current collection component, accommodated in the housing and located on a side of the end cap, wherein the side is oriented toward the main portion, and the current collection component is configured to connect the first tab and the end cap to implement electrical connection between the end cap and the first tab; wherein:
the current collection component comprises a first center hole and a guide channel, the first center hole is disposed opposite to the injection port in an axial direction of the first center hole, and the guide channel is configured to guide at least a part of an electrolytic solution into the main portion after the electrolytic solution enters the battery cell from the injection port;
the current collection component comprises an outer surface and an inner surface opposite to each other, the outer surface is oriented toward the end cap, and the inner surface is oriented toward the first tab, the guide channel comprises a guide hole, and the guide hole penetrates the outer surface and the inner surface of the current collection component; and
the guide hole penetrates a hole wall of the first center hole.

2. The battery cell according to claim 1, wherein the guide hole extends along a radial direction of the first center hole.

3. The battery cell according to any one of claims 1 to 2, wherein the guide channel comprises a plurality of guide holes, and the plurality of guide holes is distributed around the first center hole circumferentially at intervals.

4. The battery cell according to any one of claims 1 to 3, wherein the guide channel comprises a guide groove, the guide groove is located on a side of the current collection component, wherein the side is oriented toward the first tab, and the first center hole communicates with the guide groove.

5. The battery cell according to claim 4, wherein the current collection component comprises: a body portion, configured to abut against the end cap, wherein the first center hole is located on the body portion; and two abutment portions, configured to abut against the first tab, wherein both of the abutment portions are disposed protrusively on a side of the body portion, wherein the side is away from the end cap, the two abutment portions are located on two sides of the first center hole in a radial direction respectively, and the guide groove is formed between the two abutment portions.

6. The battery cell according to claim 5, wherein the abutment portions are V-shaped, and the two abutment portions are arranged back-to-back against each other.

7. The battery cell according to claim 5 or 6, wherein the first tab is welded to the abutment portions to form a weld mark, and the weld mark extends along a track of the abutment portions.

8. The battery cell according to any one of claims 1 to 7, wherein a second center hole is created on the main portion, and the second center hole is disposed opposite to the first center hole in the axial direction of the first center hole.

9. A battery, comprising: the battery cell according to any one of claims 1 to 8; and a box, configured to accommodate the battery cell.

10. An electrical device, comprising the battery according to claim 9.

11. A method for manufacturing a battery cell, wherein the manufacturing method comprises:
providing a housing, wherein an opening is created on the housing;
providing an electrode assembly, wherein the electrode assembly comprises a main portion and a first tab, and the first tab protrudes from an end of the main portion; providing an end cap, wherein an injection port is created on the end cap;
providing a current collection component, wherein the current collection component comprises a first center hole and a guide channel;
connecting the current collection component to the first tab;
letting the electrode assembly be accommodated in the housing;
letting the end cap fit and cover the opening; and
connecting the end cap to the current collection component to implement electrical connection between the end cap and the first tab, wherein the current collection component is accommodated in the housing and located on a side of the end cap, wherein the side is oriented toward the main portion;
the first center hole is disposed opposite to the injection port in an axial direction of the first center hole; and the guide channel is configured to guide at least a part of an electrolytic solution into the main portion after the electrolytic solution enters the battery cell from the injection port;
the current collection component comprises an outer surface and an inner surface opposite to each other, the outer surface is oriented toward the end cap, and the inner surface is oriented toward the first tab, the guide channel comprises a guide hole, and the guide hole penetrates the outer surface and the inner surface of the current collection component; and
the guide hole penetrates a hole wall of the first center hole.
